# EUROPEAN PATENT APPLICATION

(11) **EP 1 420 394 A2**
(43) Date of publication of application: **19.05.2004**
(21) Application number: 03026239.8
(22) Date of filing: 14.11.2003
(51) Int. Cl.: G11B 5/82, G11B 5/012

(54) **Magnetic disc medium and method for recording and reproducing the same**

(30) Priority: 15.11.2002 JP 2002332268
(71) Applicant: Fuji Photo Film Co., Ltd., Kanagawa (JP)
(72) Inventor: Saito, Shinji, Odawara-shi Kanagawa (JP)
(74) Representative: HOFFMANN EITLE

(57) **Abstract**

A magnetic disc medium comprising: a support; a substantially nonmagnetic lower layer; and a magnetic layer comprising a binder and hexagonal ferrite powder dispersed in the binder, in this order, wherein the magnetic disc medium has an outside diameter of from 20 to 50 mm, an amount of run out in a vertical direction at an outside perimeter of the disc medium in recording and reproducing of 50 µm or less, and an amount of run out in a vertical direction at an inside perimeter of the disc medium in recording and reproducing of 25 µm or less, and a recording and reproducing method of the magnetic disc medium, wherein the magnetic disc medium has an outside diameter of from 20 to 50 mm, and recording and reproducing are performed at an engine speed to make an amount of run out in a vertical direction at an outside perimeter of the disc medium 50 µm or less, and an amount of run out in a vertical direction at an inside perimeter 25 µm or less.

## Description

### FIELD OF THE INVENTION

The present invention relates to a compact magnetic disc medium capable of high density recording comprising a magnetic layer and a nonmagnetic layer, and containing hexagonal ferrite powder in the uppermost layer, and also relates to a method for recording and reproducing the disc medium.

### BACKGROUND OF THE INVENTION

In the field of the magnetic disc medium, a 2 MB MF-2HD floppy disc using Co-modified iron oxide has been generally loaded in a personal computer. However, along with the rapid increase in the amount of data to be dealt with, the capacity of the disc has become insufficient and the increase in the capacity of the flexible disc has been demanded. On the other hand, a disc-likemagneticrecordingmedium (amagnetic recording medium in the form of a disc) comprising a thin magnetic layer and a functional nonmagnetic layer has been developed and flexible discs of the class with the capacity of 100 MB are now on the market, e.g. , those disclosed in JP-A-5-109061 (the term "JP-A" as used herein means an "unexamined published Japanese patent application"), JP-A-5-197946 and JP-A-5-290354. It is disclosed in JP-A-10-21529 that stable head touch can be obtained by using polyethylene naphthalate and prescribing the outside diameter of a disc and the thickness of a support.

However, with the rapid trend of the increase in the capacity and density of disc-like magnetic recording media, magnetic disc media, it has become difficult to obtain satisfactory characteristics even with these techniques. In particular, when reproduction is carried out with a high speed magneto-resistance head (an MR head) for high density not with a conventional electromagnetic induction type head, noise increases and sufficient performances cannot be obtained by conventional recording media.

In addition, the miniaturization of magnetic disc media is desired in the midst of rapid spread of portable computers in recent years, e.g., notebook-sized personal computers, and handy type image-recording devices. For instance, when a disc diameter is 50 mm or less, it also becomes possible to apply the disc to PCMCIA card slot of personal computers. However, although the achievement of recording capacity of several hundred MB or more, which is equal to CD-ROM and CD-R, is desired, it is difficult to reconcile the increase of capacity and miniaturization of a disc medium, since the recording area is also reduced.

### SUMMARY OF THE INVENTION

An object of the present invention is to provide a small sized magnetic disc medium also usable in a portable computer and an image-recording device, and capable of achieving recording capacity of several hundred MB or more, and another object is to provide a method for recording and reproducing the disc medium.
(1) A magnetic disc medium which comprises a support having provided thereon in order of a substantially nonmagnetic lower layer and a magnetic layer comprising hexagonal ferrite powder dispersed in a binder, wherein the magnetic disc medium has an outside diameter of from 20 to 50 mm, the amount of run out in the vertical direction (vertical vibration) at the outside perimeter of the disc in recording and reproducing of 50 µm or less, and the amount of run out in the vertical direction at the inside perimeter of 25 µm or less.
(2) The magnetic disc medium as described in the above item (1), wherein the amount of run out in the vertical direction at the outside perimeter of the disc and the amount of run out in the vertical direction at the inside perimeter are obtained by the engine speed of from 2,000 to 8,000 rpm of recording and reproducing.
(3) A method for recording and reproducing a magnetic disc medium comprising a support having provided thereon in order of a substantially nonmagnetic lower layer and a magnetic layer comprising hexagonal ferrite powder dispersed in a binder, wherein the magnetic disc medium has an outside diameter of from 20 to 50 mm, and recording and reproducing are performed at an engine speed to make the amount of run out in the vertical direction at the outside perimeter of the disc 50 µm or less, and the amount of run out in the vertical direction at the inside perimeter 25 µm or less.

### DETAILED DESCRIPTION OF THE INVENTION

For realizing the miniaturization of a magnetic disc medium having recording capacity of several hundred MB or more, it is necessary to greatly improve recording density.

It is possible to achieve sufficient output by using a high sensitivity magneto-resistance head (an MR head) in reproduction even when a track width is narrow and linear recording density is high, however, since the noise of the medium is also amplified, a high SN ratio cannot be obtained by a conventional medium which produces high noise, so that the improvement of recording density cannot be attained. Contrary to this, it has been found that low noise and a high SN ratio can be achieved in reproduction with an MR head by using hexagonal ferrite powder as the magnetic powder. Hexagonal ferrite powders are described in detail later. It is particularly necessary to use hexagonal ferrite powders having an average tabular diameter of 35 nm or less and to perform sufficient dispersion treatment. It has been found that, for instance, in the case of a magnetic disc medium having an outside diameter (the diameter of outside perimeter) of 45 mm, an SN ratio necessary to record the capacity of 1 GB or more can be achieved, as a result a recording medium applicable to a portable computer and an image-recording device, which is an object of the present invention, can be realized. However, it has been found, on the other hand, that a necessary SN ratio is certainly ensured, but stable recording and reproduction cannot be obtained in practical operation.

As a result of advancing the elucidation of the cause, the present inventors found that the above fact was caused largely by displacement in the vertical direction of a rotating disc. It was known that stable recording and reproduction could be realized by making the amount of run out in the vertical direction at the outside perimeter 50 µm or less and that at the inside perimeter 25 µm or less.

The present inventors think the reason as follows. For realizing high density recording and reproduction, it is a necessary condition that the medium should have a high SN ratio. On the other hand, as to decentericity of a track, it is necessary that the position of a head be modified with a servo signal so that the head travels on the track.

In the recording density of the object of the present invention, it is necessary that the track width be 2 µm or less, preferably 1 µm or less. However, it has been found that even a servo signal cannot follow up the head when the track width is so narrow. The present inventors found that the cause was attributed to the displacement of the rotating disc in the vertical direction. When a disc is displaced in the vertical direction, run out is generated between the positions of a track and a head, therefore, the modification by a servo signal does not effect. When the outside diameter of a disc is 50 mm or less, sufficient tracking can be obtained by making the amount of run out in the vertical direction at the outside perimeter 50 µm or less and that at the inside perimeter 25 µm or less.

The outside diameter of the magnetic disc medium according to the present invention is from 20 to 50 mm. Not only this range is fitted to a portable recorder but the amount of run out markedly increases and tracking of a head becomes impossible when the outside diameter exceeds 50 mm, as a result, a high density recording medium itself, which is the object of the present invention, cannot be realized.

The amount of run out in the present invention is obtained by catching a disc encased in a cartridge by a spindle, revolving the disc at a prescribed number of revolutions, detecting the displaced amounts in the vertical direction of the outside perimeter and the inside perimeter with a laser beam, observing these displaced amounts with an oscilloscope, and the difference between the maximum displacements on the plus side and minus side of the wave form is defined as the amount of run out. The outside perimeter is measured at the point 2 mm from the end of the outside perimeter of the disc and the inside perimeter is measured at the point 2 mm from the end of the inside perimeter. The amount of run out in the present invention is a value obtained by measurement in the state of not loading a head.

The outside diameter of the magnetic disc medium according to the present invention is from 20 to 50 mm. When the outside diameter exceeds 50 mm, the application of the magnetic disc medium to PCMCIA slot becomes difficult. While when it is smaller than 20 mm, recording capacity of several hundred MB cannot be achieved.

The inside diameter of the disc is not particularly restricted but it is generally from 2 to 10 mm. When the inside diameter is smaller than 2 mm, highly precise catching of a disc by a spindle becomes difficult, and if it is larger than 10 mm, the recording area is narrow and not preferred.

The amount of run out at the outside perimeter is preferably 30 µm or less, more preferably 20 µm or less. The lower limit is not particularly restricted but is generally 5 µm or more.

The amount of run out at the inside perimeter is preferably 15 µm or less, more preferably 10 µm or less. The lower limit is not particularly restricted but is generally 5 µm or more.

The amount of run out of a disc without a cartridge is generally greater than that of a disc with a cartridge, but it is preferably 50 µm or less even when a disc is not encased in a cartridge: The amount of run out in case of loading a head generally becomes small, and the amount is in general 30 pmorlessinthemagneticdiscmediumofthepresentinvention.

It is preferred that the maximum displacement of run out should not largely vary or the phase should not vary according to rotation of a disc. In a case where the maximum displacement varies, tracking by a servo signal is difficult.

The displacement of run out has factors of some orders in many cases during making a round. In such a case, it is preferred that run out components of higher order (tertiary or higher) be few. When the amount of higher run out is great, the variation amount of displacement to the angle becomes great, as a result, tracking by a servo signal is difficult.

In the method of the present invention, recording and reproduction are performed by selecting the engine speed so as to be able to obtain the above amount of run out. In the medium according to the present invention, it is preferred that the above amount of run out can be obtained with the rotating speed of engine of from 2,000 to 8,000 rpm. When the engine speed is lower than 2,000 rpm, the centrifugal force affecting the disc is small, so that a stable rotation state cannot be obtained and run out is liable to be great. While when it is greater than 8,000 rpm, the centrifugal force becomes too great, so that rotation also becomes unstable and run out is liable to be great.

The rate of dimensional variation of the disc medium of the present invention is preferably 0.05% or less when being stored at 60°C. There are occasions when the medium of the resent invention is used in portable recording systems and these recording systems are frequently used in the open. Accordingly, it is necessary that the medium be stable against temperature and humidity changes. It has been found that when the variation of the dimension of the disc at normal temperature (23°C) before and after storage at 60°C for one week is 0.05% or less, preferably 0.02% or less, stable tracking canbe obtained under the wide range of atmosphere even in high recording density in which the medium of the invention is used.

For specifically achieving the amount of run out of the present invention, making use of the following means or properties are exemplified in addition to the selection of engine speed.

Preferably, the amount of run out decreases when curling of a disc is 2 mm or less. More preferably, curling of a disc is 0.5 mm or less. For decreasing curling, it is effective to control the storage time of a web in a rolled state before being punched to a disc shape. The amount of run out can be decreased by heightening the flatness of a disc, but it is preferred to suppress the thickness variation of a support and a film to 10% or less for that purpose. A disc is preferably free from minute concavities and distortions. Minute distortions induce the run out of higher order and show a tendency to make following up by a servo signal difficult. The thickness of the medium of the invention is preferably from 20 to 100 µm, more preferably from 30 to 60 µm and it is preferred to select an optimal thickness according to rotation velocity. When the thickness is smaller than 20 µm, the rotation of a disc becomes unstable in the range of high velocity rotation, as a result, the amount of run out is liable to increase. When the thickness is thicker than 100 pm, it is difficult to obtain the stability in rotating state by centrifugal force, and run out is liable to increase in the range of low velocity rotation. The adhering method of a magnetic sheet to the center core of a magnetic disc is important for the run out at the inside perimeter. When an adhesive is used, it is preferred to coat the adhesive uniformly, and when an adhesive sheet is used, it is preferred to suppress the thickness variation of the adhesive sheet to 10% or less. A hot melt method is particularly preferred used to reduce the amount of run out at the inside perimeter. The amount of run out at the inside perimeter is generally smaller than that at the outside perimeter, but if a magnetic sheet is not fixed on the core accurately, the run out at the inside perimeter is sometimes greater than the run out at the outside perimeter. The end of the inside perimeter is fixedon the center core of a disc, and the vertical displacement of the inside perimeter is not only liable to cause deviation of the positional relationship of the head and the track, but also it is difficult to follow up the head and disadvantageous in tracking, since the inside perimeter is stiffer than the outside perimeter practicably. Therefore, it is preferred to make the run out at the inside perimeter smaller. The run out at the outside perimeter and the run out at the inside perimeter mutually affect to each other. For instance, if the run out at the outside perimeter is great, the run out at the inside perimeter has a tendency to become great by the influence of the run out at the outside perimeter.

The magnetic disc medium according to the present invention is described below with every constituent element.

### Hexagonal ferrite powder:

The examples of hexagonal ferrite powders which can be contained in the uppermost layer in the present invention include barium ferrite, strontium ferrite, lead ferrite, calcium ferrite, and the substitution products of these ferrites, e.g., Co, Zn and Nb substitution products. Specifically, magnetoplumbite type barium ferrite and strontium ferrite, magnetoplumbite type ferrite having covered the particle surfaces with spinel, magnetoplumbite type barium ferrite and strontium ferrite partially containing a spinel phase. The hexagonal ferrite powders may contain, in addition to the prescribed atoms, the following atoms, e.g., Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge and Nb. In general, hexagonal ferrite powders containing the following elements can be used, e.g., Co-Ti, Co-Ti-Zr, Co-Ti-Zn, Ni-Ti-Zn, Nb-Zn-Co, Sb-Zn-Co and Nb-Zn. According to starting materials and producing processes, specific impurities may be contained.

The particle size of the hexagonal ferrite powders is preferably from 10 to 35 nm as a hexagonal tabular diameter, and more preferably from 15 to 25 nm. When the tabular diameter is smaller than 10 nm, stable magnetization cannot be obtained due to thermal fluctuation. While when the particle size is greater than 35 nm, noise increases, therefore, none of such tabular diameters are suitable for high density magnetic recording of the present invention. A tabular ratio (tabular diameter/tabular thickness) is preferably from 2 to 6, and more preferably from 2.5 to 3.5. When a tabular ratio is small, the packing density in a magnetic layer becomes high, which is preferred but sufficient orientation cannot be obtained. When a tabular ratio is more than 6, noise increases due to stacking among particles. The specific surface area (S_{BET}) measured by the BET method of the particles having diameters within this range is from 30 to 100 m²/g. The specific surface area nearly coincides with the value obtained by arithmetic operation from tabular diameter and tabular thickness. The distribution of tabular diameter/tabular thickness is in general preferably as narrow as possible. It is difficult to show specific surface area distributions in numerical values but distributions can be compared by measuring TEM photographs of 500 particles selected randomly. The distribution is in many cases not regular distribution, but when expressed as the standard deviation to the average diameter by computation, σ/average diameter is from 0.1 to 2.0. For obtaining narrow particle size distribution, it is efficient to make a particle-forming reaction system homogeneous to the utmost, particles formed are subjected to distribution-improving treatments as well. For example, a method of selectively dissolving ultrafine particles in an acid solution is also known. A coercive force (Hc) of from 1,500 to 4,000 Oe (from 120 to 320 kN/m) is preferred. Higher Hc is advantageous for high density recording but coercive force is restricted by the capacities of recording heads. Hc can be controlled by particle sizes (tabular diameter·tabular thickness), the kinds and amounts of elements contained, the substitution sites of elements, and the reaction conditions of particle formation. Saturation magnetization (σₛ) is preferably from 40 to 60 A·m²/kg. σₛ is preferably higher but it has the inclination of becoming smaller as particles become finer. When magnetic powders are dispersed, the particle surfaces of the magnetic powders may also be treated with substances compatible with the dispersion media and the polymers. Inorganic and organic compounds are used as the surface treating agents. For instance, oxides or hydroxides of Si, Al and P, various kinds of silane coupling agents titanium coupling agents are representative examples of the surface treating agents. The amount of these surface treating agents is from 0.1 to 10 mass% based on the amount of the magnetic powder. The pH of magnetic powders is also important for dispersion, and the pH is generally from 4 to 12 or so. The optimal value is dependent upon the dispersion medium and the polymer. pH of from 6 to 10 or so is selected taking the chemical stability and the storage stability of the medium into consideration. The water content in magnetic powders also influences dispersion. The optimal value of water content is dependent upon the dispersion medium and the polymer, and the water content of from 0.01 to 2.0 mass% is generally selected. The producing methods of hexagonal ferrites include the following methods and any of these methods can be used in the present invention with no restriction: (1) A glass crystallization method in which metal oxides which substitute barium oxide, iron oxide and iron, and boron oxide and the like as a glass forming material are mixed so as to make a desired ferrite composition, melted, and then suddenly cooled to obtain an amorphous product, the obtained product is reheating-treated, washed and then pulverized to obtain barium ferrite crystal powder; (2) A hydrothermal reaction method in which a solution of metal salt of barium ferrite composition is neutralized with an alkali, byproducts are removed, followed by liquid phase heating at 100°C or more, washing, drying and then pulverization to obtain barium ferrite crystal powder; and (3) A coprecipitation method in which a solution of metal salt of barium ferrite composition is neutralized with an alkali, byproducts are removed, followedby drying, treatment at 1,100°C or less, and then pulverization to obtain barium ferrite crystal powder.

### Lower layer:

The lower layer in the present invention is described in detail below. The lower layer preferably comprises a nonmagnetic inorganic powder and a binder as main components. The nonmagnetic inorganic powders are selected from inorganic compounds, e.g., metallic oxide, metallic carbonate, metallic sulfate, metallic nitride, metallic carbide andmetallic sulfide. The inorganic compounds are selected from the following compounds and they can be used alone or in combination, e.g., alpha-alumina having an alpha-conversion rate of 90% or more, beta-alumina, gamma-alumina, theta-alumina, silicon carbide, chromium oxide, cerium oxide, alpha-iron oxide, goethite, corundum, silicon nitride, titanium carbide, titanium oxide, silicon dioxide, tin oxide, magnesium oxide, tungsten oxide, zirconium oxide, boron nitride, zinc oxide, calcium carbonate, calcium sulfate, barium sulfate, and molybdenum disulfide. Of these compounds, titanium dioxide, zinc oxide, iron oxide and barium sulfate are particularly preferred for the reasons that they have narrow particle size distribution and a variety of means for imparting functions, and titanium dioxide and alpha-iron oxide are more preferred. These nonmagnetic powders preferably have a particle size of from 0.005 to 2 µm. If necessary, a plurality of nonmagnetic powders each having a different particle size may be combined or single nonmagnetic powder having a broad particle size distribution may be used so as to attain the same effect as such a combination. A particularly preferred particle size of nonmagnetic powder is from 0.01 to 0.2 µm. In particular, when nonmagnetic powders are granular metallic oxides, the average particle size is preferably 0.08 µm or less, and when nonmagnetic powders are acicular metallic oxides, the long axis length is preferably 0.3 µm or less. The nonmagnetic powders for use in the present invention have a tap density of from 0.05 to 2 g/ml, and preferably from 0.2 to 1.5 g/ml; a water content of generally from 0.1 to 5 wt%, preferably from 0.2 to 3 wt%, and more preferably from 0.3 to 1.5 wt%; a pH value of generally from 2 to 11, and particularly preferably from 5.5 and 10; a specific surface area (S_{BET}) of generally from 1 to 100 m²/g, preferably from 5 to 80 m²/g, andmorepreferably from 10 to 70 m²/g; a crystallite size of preferably from 0.004 to 1 µm, and more preferably from 0.04 to 0.1 µm; an oil absorption amount using DBP (dibutyl phthalate) of generally from 5 to 100 ml/100 g, preferably from 10 to 80 ml/100 g, and more preferably from 20 to 60 ml/100 g; and a specific gravity of generally from 1 to 12, and preferably from 3 to 6. The nonmagnetic powders may have any figure, e.g., acicular, spherical, polyhedral and tabular figures. The nonmagnetic powders preferably have a Mohs' hardness of from 4 to 10. The SA (stearic acid) adsorption amount of the nonmagnetic powders is generally from 1 to 20 µmol/m², preferably from 2 to 15 µmol/m², and more preferably from 3 to 8 µmol/m². The pH value of the nonmagnetic powders is preferably between 3 and 6. The surfaces of these nonmagnetic powders are preferably covered with Al₂O₃, SiO₂, TiO₂, ZrO₂, SnO₂, Sb₂O₃, ZnO or Y₂O₃. Al₂O₃, SiO₂, TiO₂ and ZrO₂ are preferred in particular in the point of dispersibility, and Al₂O₃, SiO₂ and ZrO₂ are more preferred. These surface-covering agents may be used in combination or may be used alone. A surface-treated layer subjected to coprecipitation treatment may be used according to the purpose, alternatively, surface treatment of particles may be previously performed to be covered with alumina in the first place, and then the alumina-covered surface may be covered with silica, or vice versa. A surface-covered layer may be porous, if necessary, but a homogeneous and dense surface is generally preferred. The surface treatment amount should of course be optimized by the binders and dispersing conditions to be used.

The specific examples of the nonmagnetic powders for use in the lower layer according to the present invention include Nanotite (manufactured by Showa Denko Co., Ltd.), HIT-100 and ZA-G1 (manufactured by Sumitomo Chemical Co., Ltd.), alpha-hematite DPN-250, DPN-250BX, DPN-245, DPN-270BX, DBN-SA1 and DBN-SA3 (manufactured by Toda Kogyo Co., Ltd.), titanium oxide TTO-51B, TTO-55A, TTO-55B, TTO-55C, TTO-55S, TTO-55D, SN-100, alpha-hematite E270, E271, E300 and E303 (manufactured by Ishihara Sangyo Kaisha Ltd.), titanium oxide STT-4D, STT-30D, STT-30, STT-65C, and alpha-hematite alpha-40 (manufactured by Titan Kogyo Co., Ltd.), MT-100S, MT-100T, MT-150W, MT-500B, MT-600B, MT-100F and MT-500HD (manufactured by Teika Co., Ltd.), FINEX-25, BF-1, BF-10, BF-20 and ST-M (manufactured by Sakai Chemical Industry Co., Ltd.), DEFIC-Y and DEFIC-R (manufactured by Dowa Mining Co., Ltd.), AS2BM and TiO₂ P25 (manufactured by Nippon Aerosil Co., Ltd.), and 100A, 500A and calcined products of 100A and 500A (manufactured by Ube Industries, Ltd.). Particularly preferred nonmagnetic powders are titanium dioxide and alpha-iron oxide.

By adding carbon blacks to the lower layer, a desired micro Vickers' hardness canbe obtained in addition to well-known effects of reducing surface electrical resistance (Rs) and diminishing light transmittance. Further, it is also possible to obtain the effect of stocking a lubricant by the incorporation of carbon blacks into the lower layer. Carbon blacks, e.g., furnace blacks for rubbers, thermal blacks for rubbers, carbon blacks for coloring and acetylene blacks can be used in the present invention. The carbon blacks used in the lower layer should optimize the following characteristics by the desired effects and sometimes more effects can be obtainedby the combined use.

The carbon blacks which are used in the lower layer according to the present invention have a specific surface area (S_{BET}) of generally from 100 to 500 m²/g, preferably from 150 to 400 m²/g, a DBP oil absorption amount of generally from 20 to 400 ml/100 g, preferably from 30 to 200 ml/100 g, a particle size of generally from 5 to 80 nm, preferably from 10 to 50 nm, and more preferably from 10 to 40 nm, a pH value of from 2 to 10, a water content of from 0.1 to 10 mass%, and a tap density of from 0.1 to 1 g/ml. The specific examples of the carbon blacks for use in the present invention include BLACKPEARLS 2000, 1300, 1000, 900, 800, 880 and 700, and VULCAN XC-72 (manufacturedby Cabot Co., Ltd.), #3050B, #3150B, #3250B, #3750B, #3950B, #950, #650B, #970B, #850B, MA-600, MA-230, #4000 and #4010 (manufactured by Mitsubishi Kasei Corp.), CONDUCTEX SC, RAVEN 8800, 8000, 7000, 5750, 5250, 3500, 2100, 2000, 1800, 1500, 1255 and 1250 (manufactured by Columbia Carbon Co., Ltd.), and Ketjen Black EC (manufactured by Akzo Co., Ltd.). The carbon blacks for use in the present invention may be in advance surface-treated with a dispersant, may be grafted with a resin, or a part of the surface may be graphitized before use. The carbon blacks may be previously dispersed in a binder before addition to a coating solution. These carbon blacks can be used within the range not exceeding 50 wt% based on the above nonmagnetic inorganic powders (exclusive of carbon blacks) and not exceeding 40 % based on the total weight of the lower layer. These carbon blacks can be used alone or in combination. Regarding the carbon blacks which can be used in the present invention, for instance, Carbon Black Binran (Handbook of Carbon Blacks) (edited by the Carbon Black Association) can be referred to.

Organic powders can be used in the lower layer of the invention according to the purpose, e.g., acrylic styrene resin powders, benzoguanamine resin powders, melamine resin powders, and phthalocyanine pigments can be used. In addition, polyolefin resin powders, polyester resin powders, polyamide resin powders, polyimide resin powders andpolyethylene fluoride resin powders can also be used. The producing methods of these powders are disclosed in JP-A-62-18564 and JP-A-60-255827.

The binder resins, lubricants, dispersants, additives, solvents, dispersing methods and the like used in the magnetic layer shown below can be applied to the lower layer. In particular, with respect to the amounts and the kinds of the binder resins, and the addition amounts and the kinds of the additives and the dispersants, well-known techniques regarding the magnetic layer can be applied to the lower layer in the present invention.

Conventionally well-known thermoplastic resins, thermosetting resins, reactive resins and mixtures of these resins are used as a binder in the present invention.

Thermoplastic resins having a glass transition temperature of from -100 to 150°C, a number average molecular weight of from 1,000 to 200,000, preferably from 10,000 to 100,000, and polymerization degree of from about 50 to about 1,000 can be used in the present invention.

The examples of thermoplastic resins include polymers or copolymers containing, as the constituting unit, vinyl chloride, vinyl acetate, vinyl alcohol, maleic acid, acrylic acid, acrylic ester, vinylidene chloride, acrylonitrile, methacrylic acid, methacrylic ester, styrene, butadiene, ethylene, vinyl butyral, vinyl acetal or vinyl ether; polyurethane resins and various rubber resins. The examples of thermosetting resins and reactive resins include phenol resins, epoxy resins, curable type polyurethane resins, urea resins, melamine resins, alkyd resins, acrylic reactive resins, formaldehyde resins, silicone resins, epoxy-polyamide resins, mixtures of polyester resins and isocyanate prepolymers, mixtures of polyesterpolyol and polyisocyanate, and mixtures of polyurethane andpolyisocyanate. These resins are described in detail in Plastic Handbook, published by Asakura Shoten. In addition, well-known electron beam-curable resins can also be used in each layer. The examples of these resins and the producing methods are disclosed in detail in JP-A-62-256219. These resins can be used alone or in combination, and the examples of preferred combinations include combinations of at least one selected from vinyl chloride resins, vinyl chloride-vinyl acetate copolymers, vinyl chloride-vinyl acetate-vinyl alcohol copolymers, and vinyl chloride-vinyl acetate-maleic anhydride copolymers with polyurethane resins, or combinations of any of these resins with polyisocyanate.

Polyurethane resins having well-known structures, e.g. , polyester polyurethane, polyether polyurethane, polyether polyester polyurethane, polycarbonate polyurethane, polyester polycarbonate polyurethane and polycaprolactone polyurethane, canbeused. Concerning everybinder shown above, it is preferred that at least one polar group selected from the following groups be introduced by copolymerization or addition reaction for the purpose of obtaining further excellent dispersibility and durability, e.g., -COOM, -SO₃M, -OSO₃M, -P=O(OM)₂, -O-P=O(OM)₂ (wherein M represents a hydrogen atom or an alkali metal), -OH, -NR₂, -N⁺R₂ (wherein R represents a hydrocarbon group), an epoxy group, -SH and -CN. The amount of these polar groups is from 10⁻¹ to 10⁻⁸ mol/g, and preferably from 10⁻² to 10⁻⁶ mol/g.

The specific examples of binders which are used in the present invention include VAGH, VYHH, VMCH, VAGF, VAGD, VROH, VYES, VYNC, VMCC, XYHL, XYSG, PKHH, PKHJ, PKHC and PKFE (manufactured by Union Carbide Co., Ltd.), MPR-TA, MPR-TA5, MPR-TAL, MPR-TSN, MPR-TMF, MPR-TS, MPR-TM and MPR-TAO (manufactured by Nisshin Chemical Industry Co. , Ltd.), 1000W, DX80, DX81, DX82, DX83 and 100FD (manufactured by Electro Chemical Industry Co., Ltd.), MR-104, MR-105, MR110, MR100, MR555 and 400X-110A (manufactured by Nippon Zeon Co., Ltd.), Nippollan N2301, N2302 and N2304 (manufactured by Nippon PolyurethaneCo. , Ltd.), PandexT-5105, T-R3080, T-5201, Burnock D-400, D-210-80, CRISVON 6109 and 7209 (manufacturedbyDainippon Ink and Chemicals Inc.), Vylon UR8200, UR8300, UR8700, RV530 and RV280 (manufactured by Toyobo Co., Ltd.), Daipheramine 4020, 5020, 5100, 5300, 9020, 9022 and 7020 (manufactured by Dainichiseika Color & Chemicals Mfg. Co., Ltd.), MX5004 (manufactured by Mitsubishi Kasei Corp.), Sunprene SP-150 (manufactured by Sanyo Chemical Industries Co. Ltd.), and Salan F310 and F210 (manufactured by Asahi Chemical Industry Co., Ltd.).

The amount of binders for use in the lower layer and the magnetic layer of the present invention is generally from 5 to 50 mass% based on the amount of the nonmagnetic inorganic powder or the hexagonal ferrite powder, and preferably from 10 to 30 mass%. When vinyl chloride resins are used as a binder, the amount is from 5 to 30 mass%, when polyurethane resins are used, the amount is from 2 to 20 mass%, and it is preferred that polyisocyanate is used in an amount of from 2 to 20 mass% in combination with these binders. However, for instance, when head corrosion is caused by a slight amount of chlorine due to dechlorination, it is also possible to use polyurethane alone or a combination of polyurethane and isocyanate alone. When polyurethane is used in the present invention, it is preferred that the polyurethane has a glass transition temperature of from -50 to 150°C, preferably from 0 to 100°C, breaking elongation of from 100 to 2,000%, breaking stress of from 0.05 to 10 kg/mm² (from 0.49 to 98 MPa), and a yielding point of from 0.05 to 10 kg/mm² (from 0.49 to 98 MPa).

The magnetic disc medium according to the present invention comprise at least two layers. Accordingly, the amount of a binder, the amounts of vinyl chloride resins, polyurethane resins, polyisocyanate or other resins contained in a binder, the molecular weight of each resin constituting a magnetic layer, the amount of polar groups, or the above-described physical properties of resins can of course be varied in a lower layer and a magnetic layer, according to necessity. These factors should be rather optimized in each layer, and well-known prior techniques with respect to multilayer magnetic layers can be used in the present invention. For example, when the amount of a binder is varied in each layer, it is effective to increase the amount of a binder contained in a magnetic layer to decrease scratches on the surface of the magnetic layer. For improving head touch against a head, it is effective to increase the amount of a binder in a lower layer to impart flexibility.

The examples of polyisocyanates for use in the present invention include isocyanates, e.g., tolylene diisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate, and triphenylmethane triisocyanate; reaction products of these isocyanates with polyalcohols; and polyisocyanates formed by condensation reaction of isocyanates. These polyisocyanates are commercially available under the trade names of Coronate L, Coronate HL, Coronate 2030, Coronate 2031, Millionate MR and Millionate MTL (manufactured by Nippon Polyurethane Co., Ltd.), Takenate D-102, Takenate D-110N, Takenate D-200 and Takenate D-202 (manufactured by Takeda Chemical Industries, Ltd.), and Desmodur L, Desmodur IL, Desmodur N and Desmodur HL (manufactured by Sumitomo Bayer Co., Ltd.). These polyisocyanates may be used alone, or in combinations of two or more taking the advantage of a difference in curing reactivity in each layer.

### Carbon black, abrasive:

The examples of carbon blacks which are used in the magnetic layer of the present invention include furnace blacks for rubbers, thermal blacks for rubbers, carbon blacks for coloring and acetylene blacks. They preferably have a specific surface area (S_{BET}) of from 5 to 500 m²/g, a DBP oil absorption amount of from 10 to 400 ml/100 g, a particle size of from 5 to 300 nm, pH of from 2 to 10, a water content of from 0.1 to 10 mass%, and a tap density of from 0.1 to 1 g/ml. The specific examples of carbon blacks for use in the present invention include BLACKPEARLS 2000, 1300, 1000, 900, 905, 800 and 700 and VULCAN XC-72 (manufactured by Cabot Co., Ltd.), #80, #60, #55, #50 and #35 (manufactured by Asahi Carbon Co., Ltd.), #2400B, #2300, #900, #1000, #30, #40 and #10B (manufactured by Mitsubishi Kasei Corp.), CONDUCTEX SC, RAVEN 150, 50, 40 and 15, and RAVEN-MT-P (manufactured by Columbia Carbon Co., Ltd.), and Ketjen Black EC (manufactured by Akzo Co., Ltd.). Carbon blacks for use in the present invention may be surface-treated with a dispersant in advance, may be grafted with a resin, or a part of the surface may be graphitized before use. Carbon blacks may be previously dispersed in a binder before being added to a magnetic coating solution. These carbon blacks may be used alone or in combination. Carbon blacks are preferably used in an amount of from 0.1 to 30 mass% based on the amount of the magnetic powder. Carbon blacks can serve various functions such as preventing the static charge and reducing the friction coefficient of a magnetic layer, imparting a light-shielding property to a magnetic layer, and improving the film strength of a magnetic layer. Such functions vary depending upon the kind of the carbon black to be used. Accordingly, it is of course possible in the invention to select and determine the kinds, amounts and combinations of the carbon blacks to be added to a magnetic layer and a lower layer, on the basis of the above-described various properties such as the particle size, the oil absorption amount, the electric conductivity and the pH value, or these shouldbe rather optimized in each layer. Regarding carbon blacks which can be used in a magnetic layer of the invention, e.g., Carbon Black Binran (Handbook of Carbon Blacks), edited by the Carbon Black Association, can be referred to.

As abrasives which are used in the present invention, well-known materials essentially having a Mohs' hardness of 6 or more may be used alone or in combination, e. g. , alpha-alumina having an alpha-conversion rate of 90% or more, beta-alumina, silicon carbide, chromium oxide, cerium oxide, alpha-iron oxide, corundum, artificial diamond, silicon nitride, silicon carbide, titanium carbide, titanium oxide, silicon dioxide, and boron nitride. Composites composed of these abrasives (abrasives obtained by surface-treating with other abrasives) may also be used. Compounds or elements other than the main component are often contained in these abrasives, but the intended effect can be achieved so long as the content of the main component is 90% or more. These abrasives preferably have a particle size of from 0.01 to 2 pm. In particular, for improving electromagnetic characteristics, abrasives having narrow particle size distribution are preferably used. For improving durability, a plurality of abrasives each having a different particle size may be combined according to necessity, or a single abrasive having a broad particle size distribution may be used so as to attain the same effect as such a combination. Abrasives for use in the present invention preferably have a tap density of from 0.3 to 2 g/ml, a water content of from 0.1 to 5 mass%, a pH value of from 2 to 11, and a specific surface area (S_{BET}) of from 1 to 30 m²/g. The figure of the abrasives for use in the present invention may be any of acicular, spherical and die-like figures. Abrasives having a figure partly with edges are preferred for their high abrasive property. The specific examples of abrasives for use in the invention include AKP-12, AKP-15, AKP-20, AKP-30, AKP-50, HIT-20, HIT-30, HIT-55, HIT-60, HIT-70, HIT-80 and HIT-100 (manufactured by Sumitomo Chemical Co., Ltd.), ERC-DBM, HP-DBM and HPS-DBM (manufactured by Reynolds International Inc.), WA10000 (manufactured by Fujimi Kenmazai K.K.), UB20 (manufactured by Uemura Kogyo K.K.), G-5, Chromex U2 and Chromex U1 (manufactured by Nippon Chemical Industrial Co., Ltd.), TF100 and TF140 (manufactured by Toda Kogyo Co., Ltd.), beta-Random Ultrafine (manufactured by Ividen Co., Ltd.), and B-3 (manufactured by Showa Mining Co., Ltd.). These abrasives can also be added to a lower layer, if necessary. By adding abrasives into a lower layer, it is possible to control the surface configuration or prevent abrasives from protruding. The particle sizes and the amounts of these abrasives to be added to a magnetic layer and a lower layer should be selected at optimal values.

### Additive:

Additives having a lubricating effect, an antistatic effect, a dispersing effect and a plasticizing effect are used in a magnetic layer and a lower layer in the present invention. The examples of the additives which can be used in the present invention include molybdenum disulfide, tungsten disulfide, graphite, boron nitride, graphite fluoride, silicone oil, polar group-containing silicon, fatty acid-modified silicon, fluorine-containing silicon, fluorine-containing alcohol, fluorine-containing ester, polyolefin, polyglycol, alkylphosphoric ester and alkali metal salt thereof, alkylsulfuric ester and alkali metal salt thereof, polyphenyl ether, phenylphosphonic acid, aminoquinones, various kinds of silane coupling agents, titanium coupling agents, fluorine-containing alkylsulfuric ester and alkali metal salt thereof, monobasic fatty acid having from 10 to 24 carbon atoms (which may contain an unsaturated bond or may be branched) and metal salt thereof (e.g., with Li, Na, K or Cu), mono-, di-, tri-, tetra-, penta- or hexa-alcohol having from 12 to 22 carbon atoms (which may contain an unsaturated bond or may be branched), alkoxy alcohol having from 12 to 22 carbon atoms, mono-fatty acid ester, di-fatty acid ester or tri-fatty acid ester comprising a monobasic fatty acid having from 10 to 24 carbon atoms (which may contain an unsaturated bond or may be branched) and any one of mono-, di-, tri-, tetra-, penta- and hexa-alcohols having from 2 to 12 carbon atoms (which may contain an unsaturated bond or may be branched), fatty acid ester of monoalkyl ether of alkylene oxide polymer, fatty acid amide having from 8 to 22 carbon atoms, and aliphatic amine having from 8 to 22 carbon atoms.

The specific examples of fatty acids as additives include capric acid, caprylic acid, lauric acid, myristic acid, palmitic acid, stearic acid, behenic acid, oleic acid, elaidic acid, linolic acid, linolenic acid and isostearic acid. The examples of esters include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oleyl oleate, dodecyl stearate, tridecyl stearate, oleyl erucate, and neopentyl glycol didecanoate, and the examples of alcohols include oleyl alcohol, stearyl alcohol and lauryl alcohol. In addition to the above compounds, nonionic surfactants, e.g., alkylene oxide, glycerol, glycidol or alkylphenol-ethylene oxide adducts; cationic surfactants, e.g., cyclic amine, ester amide, quaternary ammonium salts, hydantoin derivatives, heterocyclic compounds, phosphoniums and sulfoniums; anionic surfactants containing an acid group such as a carboxylic acid, a sulfonic acid, a phosphoric acid, a sulfuric ester group or aphosphoric ester group; and ampholytic surfactants, e.g., amino acids, aminosulfonic acids, sulfuric or phosphoric esters of amino alcohols, and alkylbetain type surfactants can also be used. The details of these surfactants are described in Kaimen Kasseizai Binran (Handbook of Surfactants), Sangyo Tosho Publishing Co., Ltd. These lubricants and antistatic agents need not be 100% pure and they may contain impurities such as isomers, unreacted products, byproducts, decomposed products and oxides, in addition to the main components. However, the content of such impurities is preferably 30 mass% or less, and more preferably 10 mass% or less.

These lubricants and surfactants which are used in the present invention severally have different physical functions. The kinds, amounts, and proportions of combined use of lubricants generating a synergistic effect should be determined optimally in accordance with the purpose. A lower layer and a magnetic layer can separately contain different fatty acids each having a different melting point so as to prevent bleeding out of the fatty acids to the surface, or different esters each having a different boiling point, a different melting point or a different polarity so as to prevent bleeding out of the esters to the surface. Also, the amounts of surfactants may be controlled so as to improve the coating stability, or the amount of lubricants in an intermediate layer may be made larger so as to improve the lubricating effect of the surface thereof. Examples are by no means limited thereto. In general, the total amount of lubricants is from 0.1 to 50 mass% based on the magnetic powder or the nonmagnetic inorganic powder, preferably from 2 to 25 mass%.

All or a part of the additives to be used in the present invention may be added to a magnetic coating solution and a nonmagnetic coating solution in any step of preparation. For example, additives may be blended with a magnetic powder before a kneading step, may be added in a step of kneading a magnetic powder, a binder and a solvent, may be added in a dispersing step, may be added after a dispersing step, or may be added just before coating. According to purpose, there is a case of capable of attaining the object by coating all or a part of additives simultaneously with or successively after coating a magnetic layer. According to purpose, lubricants may be coated on the surface of a magnetic layer after calendering treatment or after completion of slitting.

Well-known organic solvents can be used in the present invention, e.g., the organic solvents disclosed in JP-A-6-68453, can be used.

### Layer Constitution:

A subbing layer may be provided between a support and a lower layer for adhesion improvement. The thickness of the subbing layer is from 0.01 to 2 µm, and preferably from 0.02 to 0.5 µm. The medium according to the present invention is generallyadisc-likemediumcomprisinglowerlayersandmagnetic layers provided on both surface sides of a support, but a lower layer and a magnetic layer may be provided on either one surface side. When a lower layer and a magnetic layer are provided on only one surface side of a support, a back coating layer may be provided on the side of the support opposite to the side having the lower layer and the magnetic layer for the purpose of static charge prevention and curling correction. The thickness of the back coating layer is from 0.1 to 4 µm, and preferably from 0.3 to 2.0 µm. Well-known subbing layers and back coating layers can be used.

The thickness of the magnetic layer of the medium of thepresent invention is optimizedaccording to the specification of the head to be used and the recording signal zone, and the thickness is generally from 0.01 to 1.0 µm, and preferably from 0.03 to 0.2 µm. The magnetic layer may comprise two or more layers each having different magnetic characteristics and well-known multilayer magnetic layer constitutions can be applied to the present invention.

The thickness of the lower layer of the magnetic recording medium of the invention is generally from 0.2 to 5.0 pm, preferably from 0.5 to 3.0 pm, and more preferably from 1.0 to 2.5 µm. The lower layer of the medium of the invention exhibits the effect so long as it is substantially nonmagnetic even if, or intentionally, it contains a small amount of magnetic powder as an impurity, which is as a matter of course regarded as essentially the same construction as in the present invention. The term "substantially nonmagnetic" means that the residual magnetic flux density of the lower layer is 10 mT or less and the coercive force is 100 Oe (8 kA/m) or less, preferably the residual magnetic flux density and the coercive force are zero.

### Support:

Well-known materials can be used as a support in the present invention. Films of polyethylene terephthalate, polyethylene naphthalate, aramid and polycarbonate are preferably used. The thickness of a support is optimized by the disc diameter and the engine speed of the disc, but it is generally from 20 to 100 µm as described above.

If necessary, a lamination type support can also be used to separately control the surface roughnesses of a magnetic surface and a base surface. These supports may be subjected to surface treatments in advance, such as corona discharge treatment, plasma treatment, adhesion assisting treatment, heat treatment, and dust removing treatment.

For attaining the object of the present invention, it is preferred to use a support having a central plane average surface roughness (Ra) of preferably 10 nm or less measured by TOPO-3D (by WYKO Co.), and more preferably 5 nm or less. It is preferred that a support not only has a small central plane average surface roughness but also is free from coarse projections having a height of 200 nm or higher. Surface roughness configuration is freely controlled by the size and the amount of fillers added to a support. The examples of such fillers include acryl-based organic fine powders, in addition to oxides and carbonates of Ca, Si and Ti. Supports for use in the present invention preferably have a maximum height (Rmax) of 1 µm or less, ten point average roughness (Rz) of 200 nm or less, central plane peak height (Rp) of 200 nm or less, central plane valley depth (Rv) of 200 nm or less, and average wavelength (λa) of from 5 to 300 µm. For obtaining desired electromagnetic characteristics and durability, the projection distribution on the surface of a support can be controlled arbitrarily by fillers, e.g., the number of projections having sizes of from 0.01 to 1 µm can be controlled each within the number of from 0 to 2,000 per 0.1 mm².

A support for use in the invention has a thermal shrinkage factor at 105°C for 30 minutes of preferably 0.5% or less, more preferably 0.3% or less, a thermal shrinkage factor at 80°C for 30 minutes of preferably 0.3% or less, more preferably 0.2% or less, and a thermal shrinkage factor at 60°C for one week of preferably 0.05% or less, and more preferably 0.02% or less. A support has a temperature expansion coefficient of from 10⁻⁴ to 10⁻⁸/°C, preferably from 10⁻⁵ to 10⁻⁶/°C, and a humidity expansion coefficient of 10⁻⁴/RH% or less, preferably 10⁻⁵/RH% or less. These thermal characteristics, dimensional characteristics and mechanical strength characteristics are preferably almost equal in every direction of in-plane of a support with the difference of 10% or less.

### Manufacturing Method:

Processes of preparing a magnetic layer coating solution for use in the magnetic disc medium of the present invention comprise at least a kneading step, a dispersing step and blending steps to be carried out optionally before and/or after the kneading and dispersing steps. Each of these steps may be composed of two or more separate stages. Materials such as magnetic powder, nonmagnetic powder, a binder, a carbon black, an abrasive, an antistatic agent, a lubricant and a solvent for use in the present invention may be added in any step at any time, and each material may be added in two or more steps separately. For instance, polyurethane can be added in parts in a kneading step, a dispersing step, or a blending step for adjusting viscosity after dispersion. For achieving the object of the present invention, the above steps can be performed partly with conventionally well-known producing techniques. It is preferred to use powerful kneading machines such as an open kneader, a continuous kneader, a pressure kneader or an extruder in a kneading step. When a kneader is used, magnetic powder or nonmagnetic powder and all or a part of a binder (preferably 30 mass% or more of the total binders) in the range of from 15 to 500 parts per 100 parts of the magnetic powder are kneading-treated. Details of kneading treatment are disclosed in JP-A-1-106338 and JP-A-1-79274. When a magnetic layer coating solution and a lower layer coating solution are dispersed, glass beads can be used, but dispersing media having a high specific gravity, e.g., zirconia beads, titania beads and steel beads, are preferably used for dispersing hexagonal ferrite powders. Optimal particle size and packing density of these dispersing media should be selected. Well-known dispersing apparatus can be used in the invention.

The following methods are preferably used for coating a magnetic disc medium having a multilayer constitution in the present invention. As the first method, a lower layer is coated by any of gravure coating, roll coating, blade coating and extrusion coating apparatus in the first place, which are generally used in the coating of a magnetic coating solution, and then an upper layer is coated while the lower layer is still wet by means of a support pressing type extrusion coating apparatus as disclosed in JP-B-1-46186 (the term "JP-B" as used herein means an "examined Japanese patent publication"), JP-A-60-238179 and JP-A-2-265672. As the second method, an upper layer and a lower layer are coated almost simultaneously using a coating head equipped with two slits for feeding coating solution as disclosed in JP-A-63-88080, JP-A-2-17971 and JP-A-2-265672. As the third method, an upper layer and a lower layer are coated almost simultaneously using an extrusion coating apparatus equipped with a backup roll as disclosed in JP-A-2-174965. For preventing the electromagnetic characteristics of a magnetic disc medium from lowering due to agglomeration of magnetic particles, it is preferred to give shear to the coating solution in a coating head by the methods as disclosed in JP-A-62-95174 and JP-A-1-236968. With respect to the viscosity of a coating solution, it is necessary to satisfy the range of the numeric values disclosed in JP-A-3-8471. For realizing the constitution of the present invention, a successive multilayer coating method of coating a lower layer, drying the lower layer and then coating a magnetic layer on the lower layer can be used.

In manufacturing the magnetic disc medium according to the present invention, isotropic orientation can be sufficiently achieved in some cases without performing orientation using an orientation apparatus, but it is preferred to use well-known random orientation apparatuses, e.g., disposing cobalt magnets diagonally and alternately or applying an alternating current magnetic field using a solenoid. Hexagonal ferrite powders in general have an inclination for three dimensional random orientation of in-plane and in the perpendicular direction but they can be made in-plane two dimensional random orientation. It is also possible to impart to hexagonal ferrite powders isotropic magnetic characteristics in the circumferential direction by perpendicular orientation using well-known methods, e.g., using different pole and counter position magnets. Perpendicular orientation is preferred particularly when a disc medium is used for high density recording. Circumferential orientation can be performed using spin coating.

It is preferred that the drying position of a coated film can be controlled by controlling the temperature and the amount of drying air and a coating velocity. A coating velocity is preferably from 20 to 1,000 m/min. and the temperature of drying air is preferably 60°C or higher. It is also possible to carry out appropriate preliminary drying before a coated film enters a magnet zone.

After drying, calendering treatment is generally carried out. Heat resisting plastic rollers such as epoxy, polyimide, polyamide and polyimideamide rollers, or metal rollers are used for calendering treatment. Metal rollers are preferably used for the treatment particularly when magnetic layers are coated on both surfaces of a support. Treatment temperature is preferably 50°C or more, and more preferably 100°C or more. Linear pressure is preferably 200 kg/cm (196 kN/m) or more, and more preferably 300 kg/cm (294 kN/m) or more.

### Physical Properties:

The saturation magnetic flux density of the magnetic layer of the magnetic disc medium according to the invention is preferably from 80 to 3,000 mT. The coercive force (Hc and Hr) is generally from 1,500 to 4,000 Oe (from 120 to 320 kA/m), and preferably from 2,000 to 3,000 Oe (from 160 to 240 kA/m). The coercive force distribution is preferably narrow, and the SFD and the SFDr are preferably 0.6 or less. The squareness ratio is preferably from 0.45 to 0.65 in the case of random orientation, 0.6 or more and preferably 0.7 or more in the vertical direction in the case of vertical orientation, and 0.7 or more and preferably 0.8 or more when diamagnetic field correction is performed. The orientation ratio is preferably 0.8 or more in any case.

The magnetic disc medium in the present invention has a friction coefficient against a headof 0.5 or less andpreferably 0.3 or less at temperature of from -10°C to 40°C and humidity of from 0% to 95%, a surface inherent resistivity of a magnetic layer surface of preferably from 10⁴ to 10¹² ohm/sq, a charge potential of preferably from -500 V to +500 V, an elastic modulus at 0.5% elongation of a magnetic layer of preferably from 100 to 2,000 kg/mm² (from 980 to 19,600 N/mm²) in every direction of in-plane, a breaking strength of preferably from 10 to 70 kg/cm² (from 98 to 686 N/mm²), an elastic modulus of preferably from 100 to 1,500 kg/mm² (from 980 to 14,700 N/mm²) in every direction of in-plane, a residual elongation of preferably 0.5% or less, and a thermal shrinkage factor at every temperature of 100°C or less of preferably 1% or less, more preferably 0.5% or less, and most preferably 0.1% or less. The glass transition temperature of a magnetic layer (the maximum of loss elastic modulus of dynamic visco-elasticity measurement measured at 110 Hz) is preferably from 50°C to 120°C, and that of a lower layer is preferably from 0°C to 100°C. The loss elastic modulus of a magnetic layer is preferably within the range of from 1x10³ to 8x10⁴ N/cm², and the loss tangent is preferably 0.2 or less. When the loss tangent is too great, adhesion failure is liable to occur. These thermal and mechanical characteristics are preferably almost equal in every direction of in-plane of a medium within difference of 10% or less. The residual amount of solvent in a magnetic layer is preferably 100 mg/m² or less, and more preferably 10 mg/m² or less. The void ratio of a coating layer is preferably 30% by volume or less, and more preferably 20% by volume or less, with both of a lower layer and an upper layer. The void ratio is preferably smaller for obtaining higher output, but a specific value should be preferably secured depending upon purposes in some cases. For example, in a disc medium which is repeatedly used, large void ratio contributes to good running durability in many cases.

The central plane average surface roughness (Ra) of a magnetic layer surface measured by TOPO-3D is preferably 5 nm or less, more preferably 3 nm or less, and particularly preferably 2 nm or less. A magnetic layer has a maximum height (Rmax) of 200 nm or less, a ten point average roughness (Rz) of 80 nm or less, a central plane peak height (Rp) of 80 nm or less, a central plane valley depth (Rv) of 80 nm or less, and an average wavelength (λa) of from 5 to 300 µm. It is preferred to optimize a friction coefficient by arbitrarily setting the surface projections of a magnetic layer of sizes of from 0.01 µm to 1 µm within the range of the number of from 0 to 2,000. Theprojection distribution can be easily controlled by controlling the surface property by fillers in a support, the particle size and the amount of the magnetic powder added to a magnetic layer, or by the surface configuration of the rolls used in calender treatment.

It is easily conceivable that these physical properties can be varied according to purposes in a lower layer and a magnetic layer of a magnetic disc medium in the present invention. For example, the elastic modulus of a magnetic layer is made higher to improve running durability and at the same time the elastic modulus of a lower layer is made lower than that of a magnetic layer, to thereby improve the head touch of the magnetic disc medium.

### EXAMPLES

The present invention will be illustrated in detail with reference to examples below, but these are not tobe construed as limiting the invention. In examples "parts" means "parts by mass (weight)".

### Preparation of coating solution:

### Magnetic coating solution:

| | |
|---|---|
| Barium ferrite magnetic powder | 100 parts |

Composition in molar ratio based on Fe:
Fa: 8.0, Zn: 4.0, Al: 4.0, Nb: 2.0,
Co: 1.0, Ni: 0.2, Mn: 0.2, P: 0.1,
Ca: 0.05, Cr: 0.02
Hc: 2,400 Oe (192 kA/m)
S_{BET}: 60 m²/g
σₛ: 60 A·m²/kg
Average tabular diameter: 22 nm
Average tabular ratio: 3.0
pH: 6.8

| | |
|---|---|
| Polyurethane (functional group: | 14 parts |
| SO₃Na 350 milli eq/g) | |
| Diamond fine powder (average particle size: | 3 parts |
| 0.1 µm) | |
| Alumina (average particle size: 0.15 µm) | 1 part |
| Carbon black (average particle size: 0.09 µm) | 1 part |
| Butyl stearate | 2 parts |
| Butoxyethyl stearate | 2 parts |
| Isohexadecyl stearate | 2 parts |
| Stearic acid | 1 part |
| Methyl ethyl ketone | 160 parts |
| Cyclohexanone | 160 parts |

### Nonmagnetic coating solution:

| | |
|---|---|
| Nonmagnetic powder, α-Fe₂O₃, hematite | 80 parts |

Average long axis length: 0.06 µm
S_{BET}: 70 m²/g
pH: 9

| | |
|---|---|
| Surface-covering compound: Al₂O₃, 8 mass% | |
| Carbon black | 25 parts |
| (average particle size: 0.02 µm) | |
| Polyurethane (functional group: | 12 parts |
| SO₃Na 100 milli eq/g) | |
| Phenylphosphonic acid | 2 parts |
| Butyl stearate | 3 parts |
| Butoxyethyl stearate | 3 parts |
| Isohexadecyl stearate | 3 parts |
| Stearic acid | 1 part |
| Methyl ethyl ketone/cyclohexanone | 250 parts |
| (8/2 mixed solvent) | |

The components of each of the above two coating solutions were kneaded by a kneader and dispersed in a sand mill with zirconia beads. Polyisocyanate was added to each resulting dispersion solution, that is, 6 parts to the coating solution for forming a lower layer, and 4 parts to the coating solution for forming a magnetic layer. Further, 40 parts of methyl ethyl ketone was added to each solution, and each solution was filtered through a filter having an average pore diameter of 1 µm, to thereby obtain coating solutions for forming a lower layer and a magnetic layer.

The obtained lower layer coating solution was coated on both surfaces of a polyethylene naphthalate support having a prescribed thickness and a central plane surface roughness of 3 nm in a dry coating thickness of 1.5 µm, and dried. The magnetic layer coating solution was coated on both lower layers in a dry thickness of 0.08 µm. After drying, the coated layers were subjected to calendering treatment with calenders of 7 stages at 90°C at linear pressure of 300 kg/cm (294 kN/m). The obtained web was punched to a disc having a prescribed outside diameter and an inside diameter, the disc was subjected to surface treatment by abrasives, and encased in a cartridge. Thus , Samples 1 to 16 of the magnetic disc media were prepared.

The characteristics of the thus-obtained magnetic disc media are shown in Tables 1 and 2 below. The modification of medium thickness was done by modifying the thickness of the support. Curling was adjusted by changing the lapse of time of preservation of the rolled web before punching and changing the punching position in the machine direction of the roll. The method of adhesion of a disc to the center core of a disc was performed by A of using a hot melt method and B of using an adhesive.

The performances of each magnetic disc medium was evaluated by the methods described below by changing the engine speed. The results obtained are shown in Tables 1 and 2.

### Methods of Evaluation:

### Curling:

A punched disc before being encased in a cartridge was stood in the perpendicular direction supported on the inside diameter part, and the displacement of the outside perimeter end in the horizontal direction to the position of the inside perimeter end was measured by a laser displacement gauge.

### Amount of run out:

The amount of displacement in the vertical direction was measured with a laser displacement gauge at the positions 2 mm from the outside perimeter end and 2 mm from the inside perimeter end rotating at a prescribed engine speed, and the differences between the maximum values and the minimum values were taken as the amounts of outside perimeter run out and inside perimeter run out respectively. The displacement amount and the phase are generally almost constant with every rotation, but when they fluctuate, the difference between the maximum value and the minimum value of the measurement during 10 seconds after engine speed has been settled is taken as the amount of run out.

### Off-track:

A composite type MR head having a track pitch of 1.5 µm and a track width of 1.0 µm was used for measurement. An off-track amount was calculated from the reproduction output of previously recorded servo signals and off-track was obtained as percentage to the track width. The outside perimeter was the position 2 mm from the outside perimeter end and the inside perimeter was the position 2 mm from the inside perimeter end.

### Error rate:

The incidence of bit error of the time when signals of linear recording density of 250 kbpi were recorded on all over the disc and reproduced was found with a composite type MR head having a track pitch of 1.5 µm (track density: 16.9 ktpi) and a track width of 1.0 µm.

The areal recording density in this case is 4.2 Gbit/in². This areal recording density corresponds to the capacity of about 1.6 GB by a disc having an outside diameter of 50 mm and about 0.4 GB by a disc having an outside diameter of 25 mm, although it is also dependent upon the configuration of a recording area.

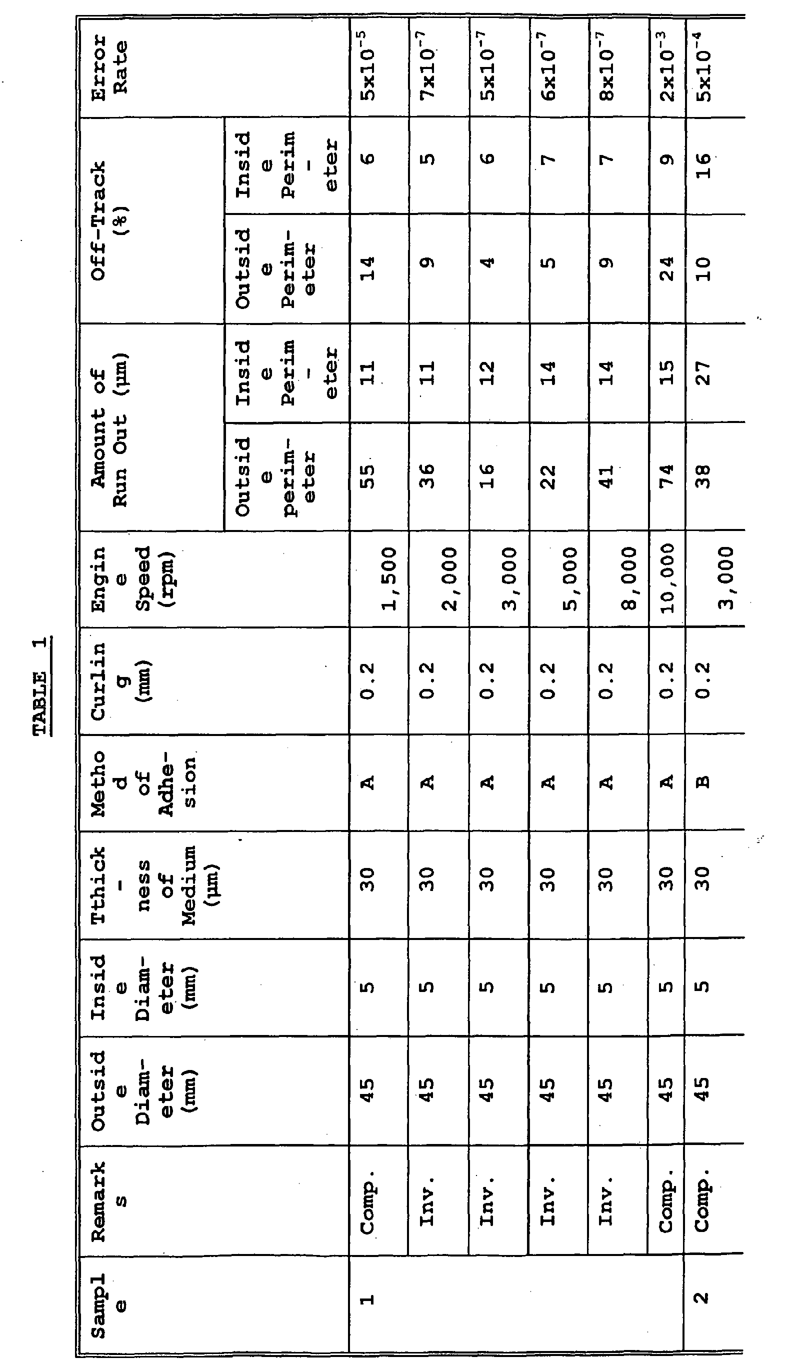

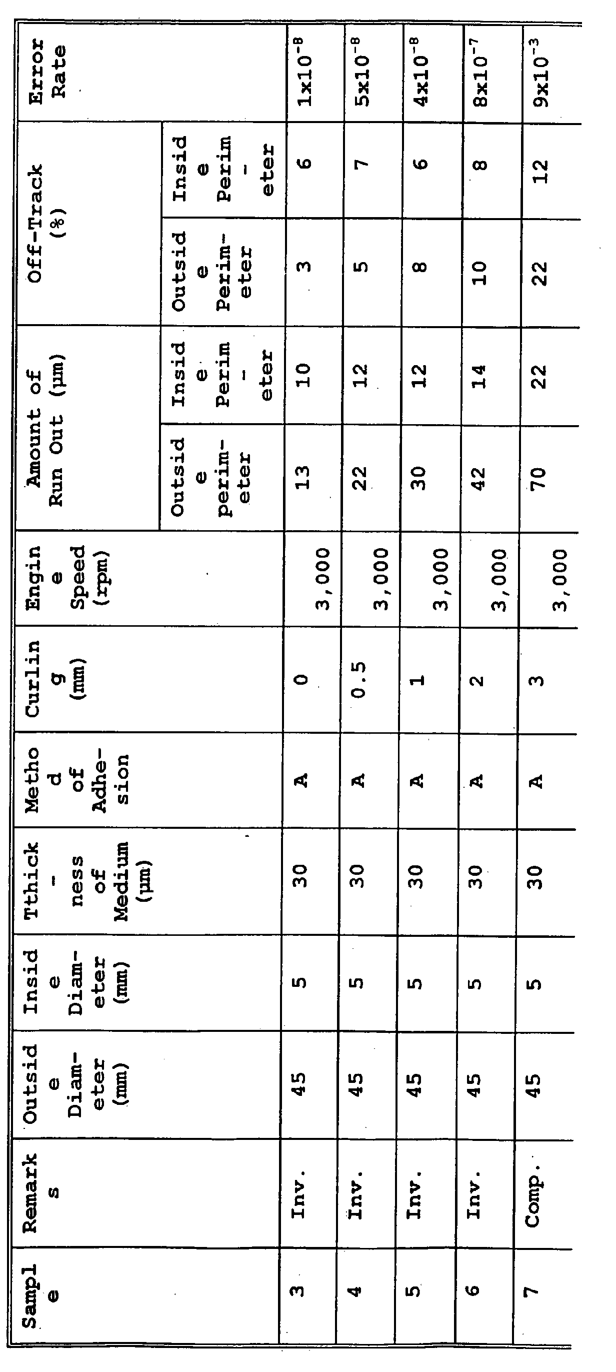

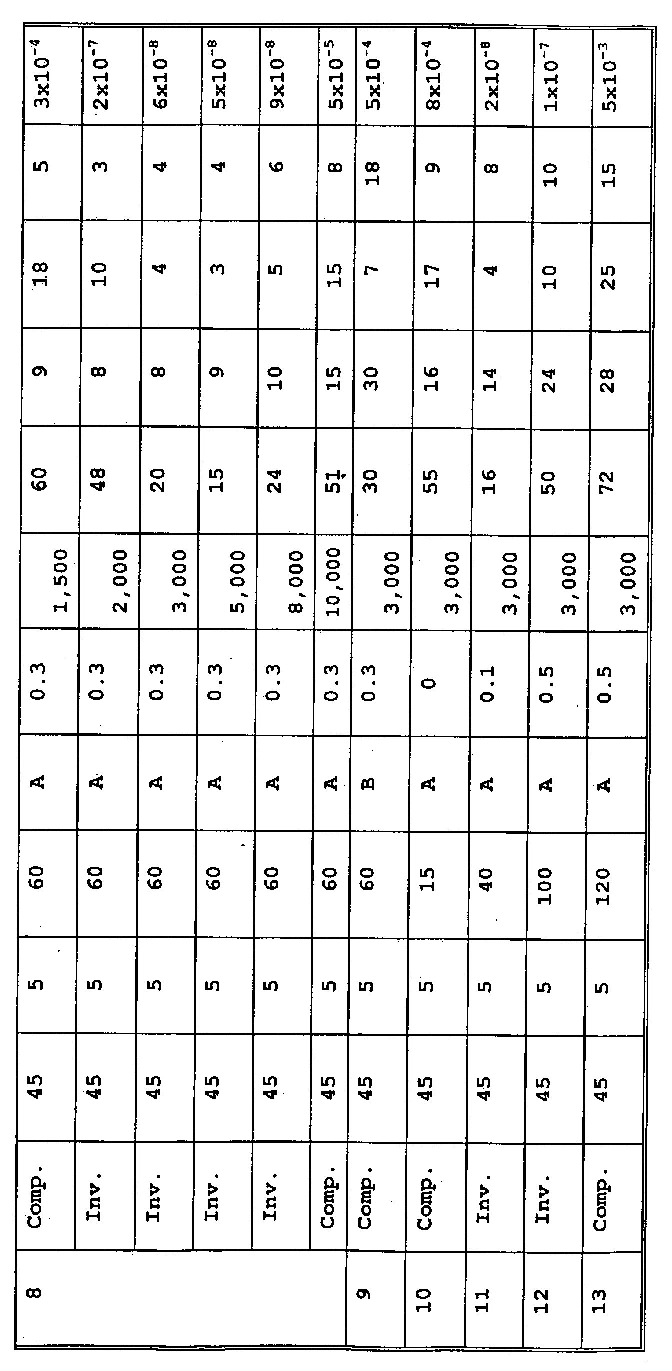

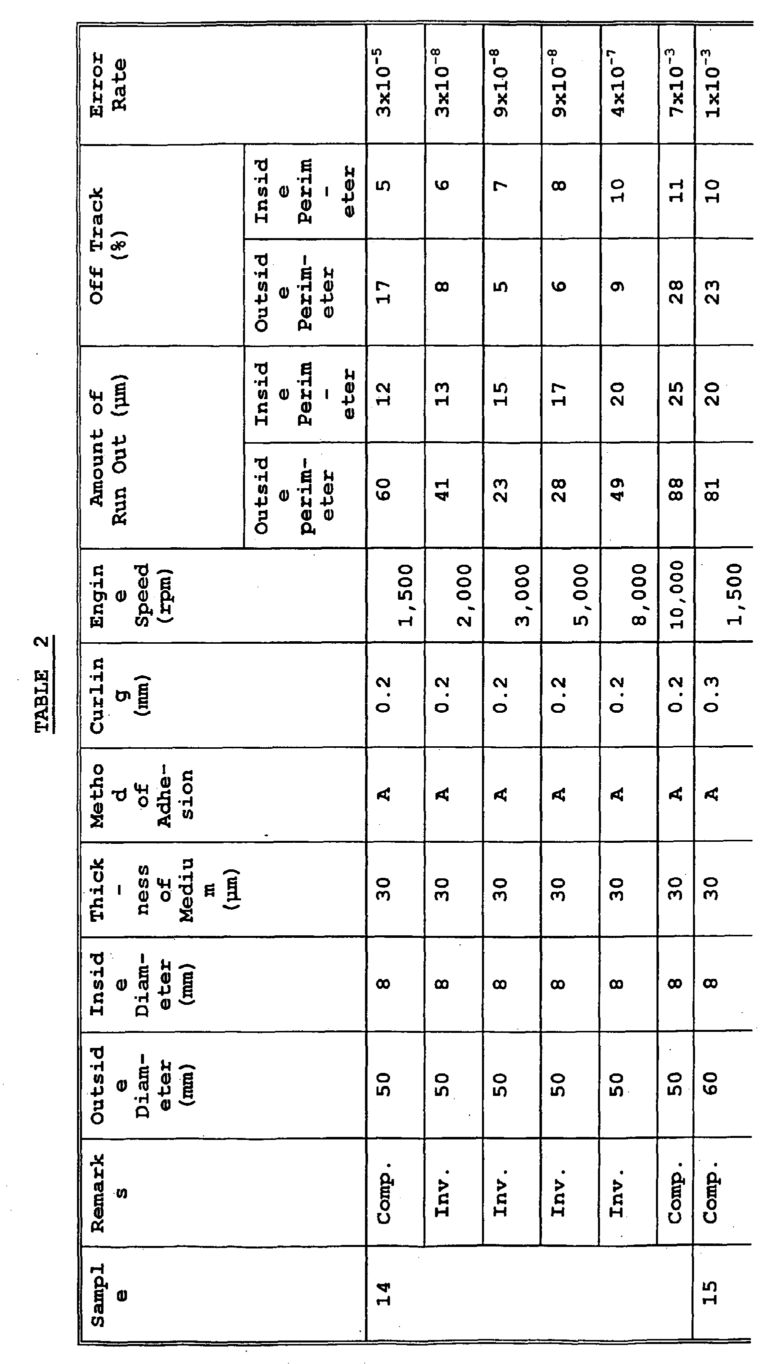

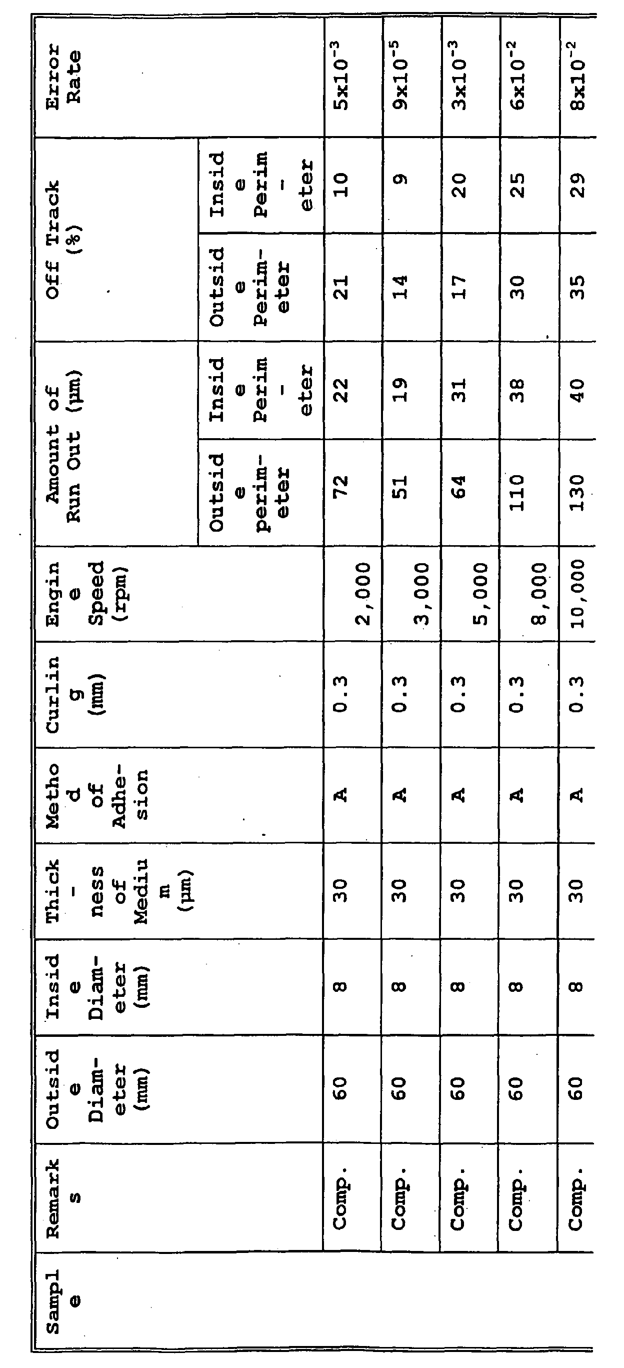

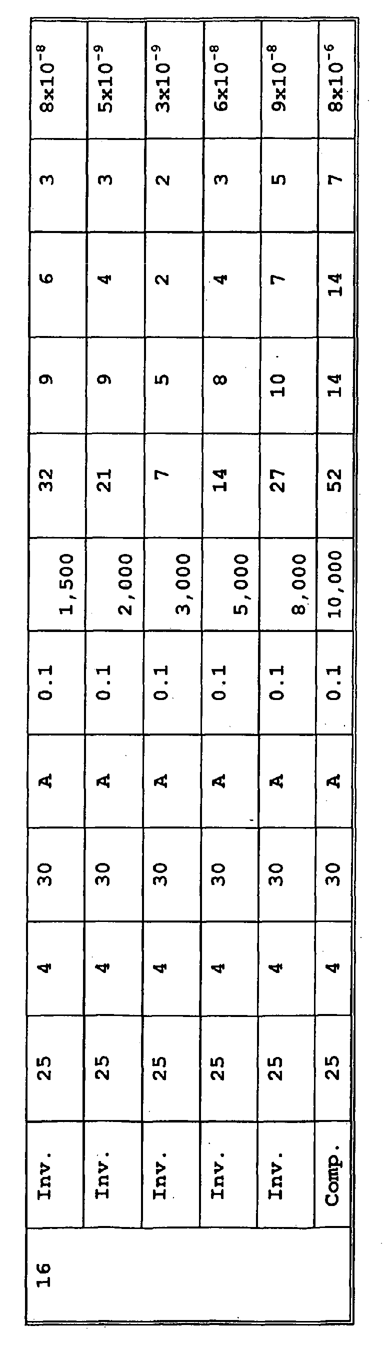

It can be understood from the results shown in the above tables that the methods and media according to the present invention are not only suitable for compact portable recording media, but also they show stable tracking and excellent error rate of practicable level of 10⁻⁷ or less, so that recording and reproduction of high capacity of several hundred MB or more can be achieved.

According to the present invention, recording and reproduction of high capacity of several hundred MB or more can be effected stably by specifying the amount of run out at the time of recording and reproduction of a compact size magnetic disc medium having an outside diameter of from 20 to 50 mm.

This application is based on Japanese Patent application JP 2002-332268, filed November 15, 2002, the entire content of which is hereby incorporated by reference, the same as if set forth at length.

## Claims

1. A magnetic disc medium comprising:
a support;
a substantially nonmagnetic lower layer; and
a magnetic layer comprising a binder and hexagonal ferrite powder dispersed in the binder, in this order,
wherein the magnetic disc medium has an outside diameter of from 20 to 50 mm, an amount of run out in a vertical direction at an outside perimeter of the disc medium in recording and reproducing of 50 µm or less, and an amount of run out in a vertical direction at an inside perimeter of the disc medium in recording and reproducing of 25 µm or less.

2. The magnetic disc medium according to claim 1, wherein the amount of run out in the vertical direction at the outside perimeter and the amount of run out in the vertical direction at the inside perimeter are obtained by an engine speed of from 2,000 to 8,000 rpm of recording and reproducing.

3. The magnetic disc medium according to claim 1, wherein the disc medium has curling of 2 mm or less.

4. The magnetic disc medium according to claim 1, wherein the disc medium has curling of 0.5 mm or less.

5. The magnetic disc medium according to claim 1, which has a thickness of from 20 to 100 µm.

6. The magnetic disc medium according to claim 1, which has a thickness of from 30 to 60 µm.

7. The magnetic disc medium according to claim 1, wherein the amount of run out in a vertical direction at an outside perimeter of the disc medium in recording and reproducing is 30 µm or less,

8. The magnetic disc medium according to claim 1, wherein the amount of run out in a vertical direction at an inside perimeter of the disc medium in recording and reproducing is 15 µm or less.

9. A recording and reproducing method of a magnetic disc medium, the disc medium comprising a support, a substantially nonmagnetic lower layer and a magnetic layer containing a binder and hexagonal ferrite powder dispersed in the binder, in this order, wherein the magnetic disc medium has an outside diameter of from 20 to 50 mm, and recording and reproducing are performed at an engine speed to make an amount of run out in a vertical direction at an outside perimeter of the disc medium 50 µm or less, and an amount of run out in a vertical direction at an inside perimeter 25 µm or less.

10. The recording and reproducing method according to claim 9, wherein the disc medium has curling of 2 mm or less.

11. The recording and reproducing method according to claim 9, wherein the amount of run out in a vertical direction at an outside perimeter of the disc medium in recording and reproducing is 30 µm or less,

12. The recording and reproducing method according to claim 9, wherein the amount of run out in a vertical direction at an inside perimeter of the disc medium in recording and reproducing is 15 µm or less.
